# EUROPEAN PATENT APPLICATION

(11) **EP 3 841 903 A1**
(43) Date of publication of application: **30.06.2021**
(21) Application number: 19020733.2
(22) Date of filing: 26.12.2019
(51) Int. Cl.: A42B 3/10, B62J 11/24

(54) **HELMET LOCKING SYSTEM**

(71) Applicant: Truselis, Aigars, 10965 Berlin (DE)
(72) Inventor: Truselis, Aigars, 10965 Berlin (DE)

(57) **Abstract**

Embodiments of the present disclosure relate to the Helmet Locking System, for use in personal transportation and e-vehicle ride-share systems, such as electric scooters or electric bicycles. The invention provides a helmet locking system which comprises a mounting bracket (106), and a lock device (105) with a processor adapted to close the electric lock and a helmet (107). Lock device (105) is controlled via smartphone using the Helmet Locking System app. The helmet consists of a latch pocket on the back and removable single-use hair guard layers, securely mounted on helmet padding, inside of the helmet, in order to provide a clean helmet for each user. The helmet locking system is functional and convenient to use.

## Description

### FIELD OF THE INVENTION

The present invention relates to the field of locking devices. In particular, it relates to a device for locking or fixing a helmet to a vehicle such as the electric scooter or electric bicycle, especially a vehicle that is immobilised, such as an electric scooter securely parked in a public place.

### BACKGROUND OF THE INVENTION

E-vehicles (electric scooters and bicycles) are becoming increasingly popular both as a leisure activity and as a means of transport, e.g. for commuting to work. Most users would prefer a helmet to ensure safety and comfort, and the use may in fact become a legal requirement, as it already has in some countries (Spain, Sweden, Finland). The user providing his own would face the conundrum of where to store it, since helmets are specially made to fit lock device.

This raises the problem of what to do with the helmet after parking the e-vehicle in a theft-proof manner. For a bicycle, the cable used to tie the vehicle itself to a parking facility is often too short to include a helmet. For a scooter however, an adequate solution has not yet been defined.

In the absence of a suitable device for securing the helmet to the e-vehicle, the individual consumer must carry the helmet to work, to shops, etc. This is obviously a nuisance, given the robust shape of the helmet. The need for this solution therefore extends beyond the consumer's private vehicles. E-vehicle ride- sharing in an evolving market thus still without a viable solution for securing the helmet to an electric scooter or bicycle. Several attempts have been made to solve this problem.

For example, the U.S. provisional patent application 62/669,062 with international application number PCT/US2019/030351 describes a Ride-Share Helmet Safety Compliance solution, which is only an idea on how to solve the problem. The idea relates to ride-share models, while this Helmet Locking System relates firstly to personal electric scooters and electric bicycles, and is adaptable for e-vehicle ride-share models as well. The Ride- Share Helmet Safety Compliance has a sensor, processor and a mating lock mechanism on the helmet, which makes helmet expensive, hard to manufacture, and not convenient to use. Another aspect to the compliant system relates to providing the clean use and overall cleaning of helmets, which includes a single-use hair guard dispenser, cleaning wipes dispenser, and a helmet cleaning spray all attached to frame of scooter or bicycle. These different elements may be cumbersome to the scooter and/or user, not to mention expensive to maintain.

There remains therefore a need for a device that makes it possible for users to conveniently store their helmets, ride-share or not, on the e-vehicle in a way that makes its theft as difficult as that of the e-vehicle itself (when locked or tied to a parking facility, for example).

The present inventor has devised a Helmet Locking System that contribute to the advantages while remedying the disadvantages of the prior art.

### PROBLEM TO BE SOLVED BY THE INVENTION

As previously reiterated, there is a need for improved devices, systems, and methods for securely locking articles such as helmets to e-vehicles such as electric bicycles and electric scooters. It is an object of the Helmet Locking System to provide a device and a helmet that are efficient to manufacture and effective in providing a reliable helmet locking system.

### SUMMARY OF THE INVENTION

Accordingly, the first aspect of the Helmet Locking System for a locking system, securing a helmet to an e-vehicle comprises of these characteristics:
a mounting bracket affixed to or for affixing to the e-vehicle (e.g. the frame of an electric scooter or electric bicycle);
a lock device with a processor, secured on mounting bracket and connected to e-vehicle battery;
a helmet with a latch pocket on the back and a padding with removable single-use hair guard layers, securely mounted inside of the helmet.

In the second aspect of the invention, it is necessary for the provided electric scooter or electric bicycle to have a frame enabling integration with the device as defined above.

The third aspect of the invention defines a seamless helmet padding with removable single-use hair guard layers, securely mounted inside of the helmet. The user can remove one layer of the single-use hair guard before using shared helmet.

In a fourth aspect of the invention, a method is defined for temporarily securing a helmet to an e-vehicle: providing on the vehicle a device as defined above whereby a mounting bracket and lock device are established on or fixedly mounted to a frame of the vehicle, and the helmet is locked on the locking mechanism (mounting bracket with lock device). To unlock the helmet, the user sends a command through the mobile app to the processor to close the electric lock's latch-bolt, now the user can remove the helmet from the locking mechanism. To lock the helmet, the user places the helmet between the lock device latch plate, and the head of the mounting bracket. When the helmet is placed properly, the latch-bolt retracts momentarily to accommodate the ramped surface, and then springs back to extend again into the latch pocket of helmet. The helmet is kept in place by the back of the latch-bolt's ramped surface.

In a fifth aspect of the invention, a lock device for securing an accessory (e.g. backpack or shopping bag) is provided. After the user removes the helmet for use, they can secure a personal item in its place.

Further objects, features and advantages of the present invention will be apparent to those skilled in the art upon examining the accompanying drawings and upon reading the following detailed description of the preferred embodiments.

### ADVANTAGES OF THE INVENTION

The Helmet Locking System of the present invention may be fitted or adapted to any e-vehicle and enables the helmet to be locked specifically to the e-scooter when not in use, without the need to carry additional equipment- regardless of who is riding the e-scooter or which helmet they are using. It also enables the helmet to be stored in a manner that allows it to be covered and kept away from the ground.

### BRIEF DESCRIPTION OF THE DRAWINGS

The disclosure and the following detailed description of certain embodiments thereof may be understood by reference to the following figures:
Figure 1 illustrates an electric scooter and electric bicycle with a Helmet Locking System in accordance with the principles of the present disclosure.
Figure 2 illustrates a Helmet Locking System.
Figure 3 illustrates a lock device.
Figure 4 illustrates a helmet with latch pocket on the back of the helmet and a padding with removable single-use hair guard layers.
Figure 5 illustrates a lock device connection scheme.
Figure 6 illustrates an alternative version of an electric scooter and electric bicycle with a Helmet Locking System.
Figure 7 illustrates alternative version of a Helmet Locking System.

### DETAILED DESCRIPTION OF THE INVENTION

Before explaining the present invention in detail, it is important to understand that the invention is not limited in its application to the details of the construction illustrated and the steps described herein. The invention is capable of other embodiments and of being practiced or carried out in a variety of ways. It is to be understood that the phraseology and terminology employed herein is for the purpose of description and not of limitation.

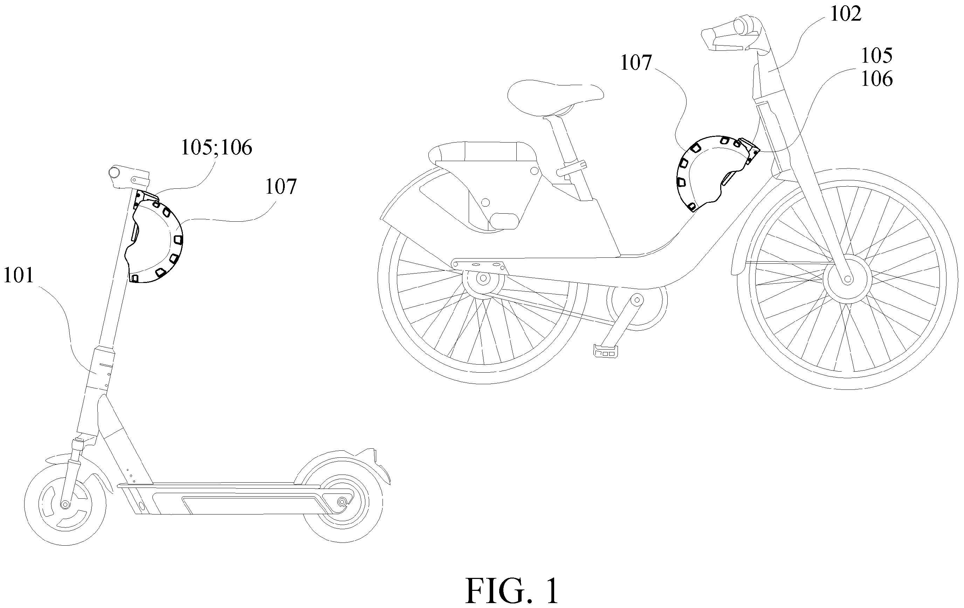

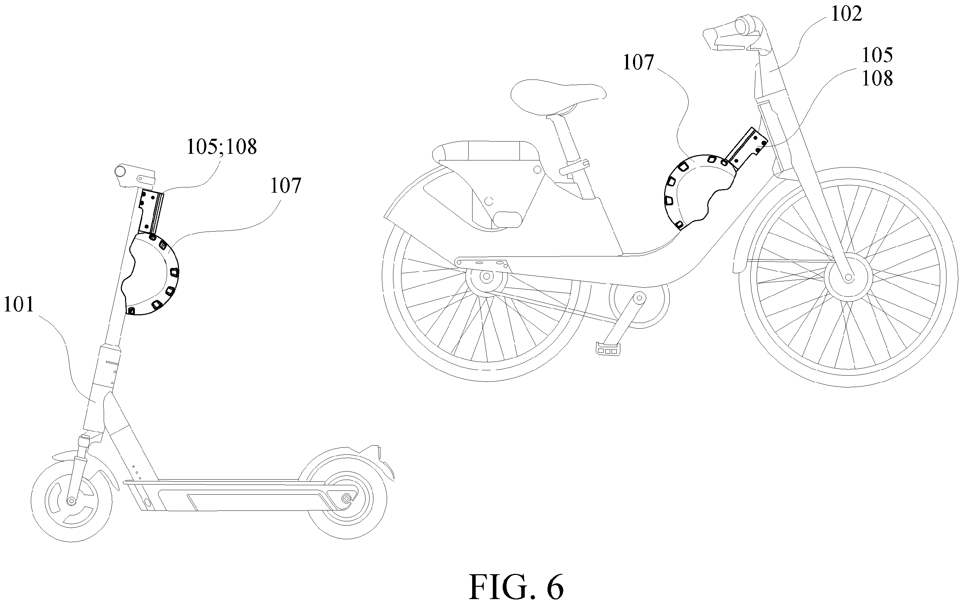

Referring to FIGS. 1-7, wherein like reference numerals indicate the same parts throughout the several figures, a mounting bracket **106**, a lock device **105** and a helmet **107** are shown.

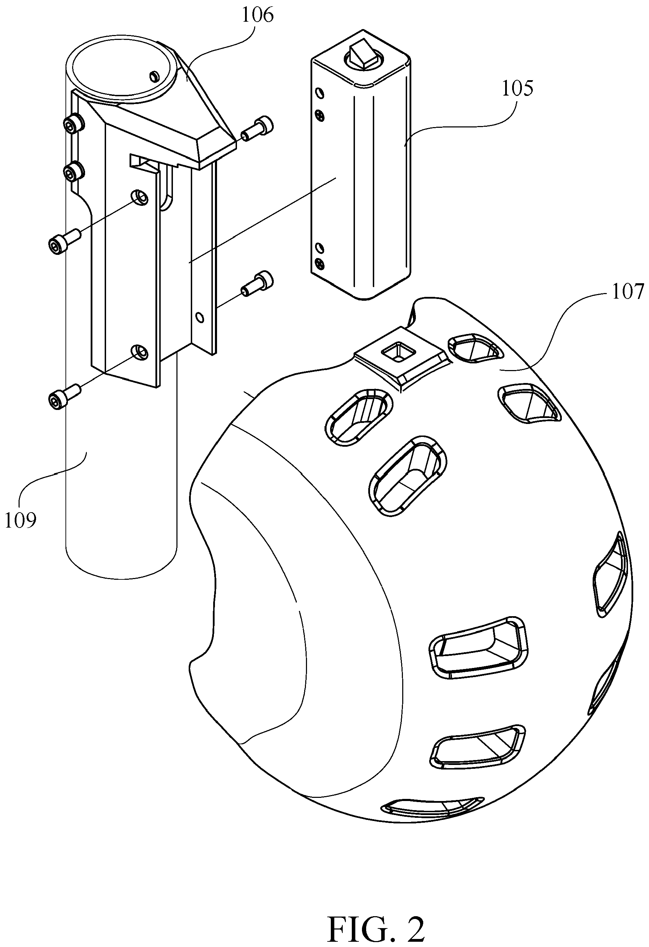

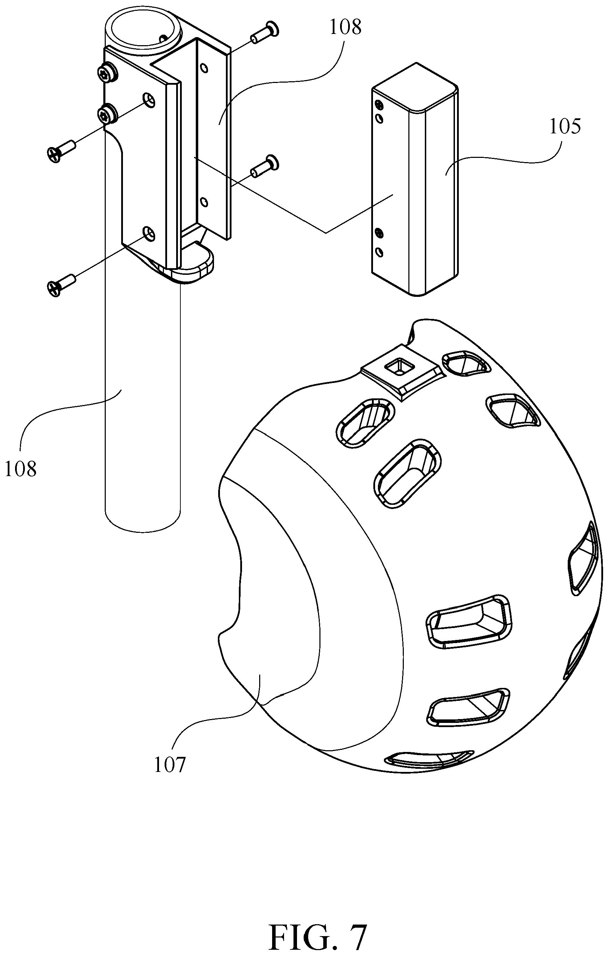

A mounting brackets **106**, **108** (FIGS. 2 and 7) are specially made for each e-vehicle model, to fit given e-vehicle frame **109**. Most e-vehicle models have mounted threaded inserts inside of a frame, for other models it will be necessary to mount the threaded inserts first and then secure the mounting bracket **106** on e-vehicle frame **109** with four Torx security bolts, as shown in FIG.2 and 7. Mounting bracket is preferably comprised of an injection moldable material, such as polyethylene (PE) or other suitable materials.

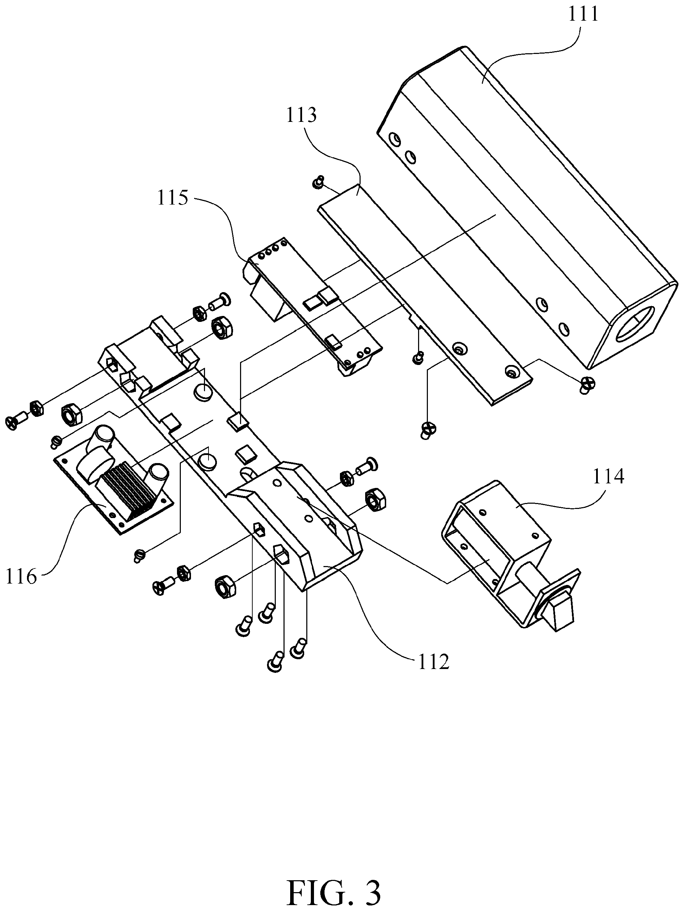

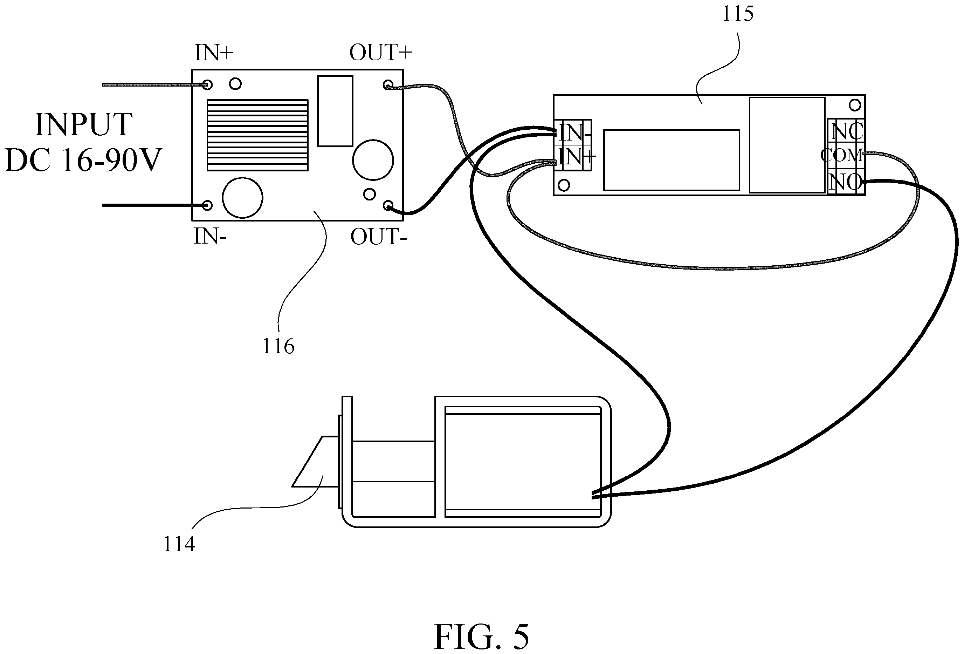

Lock device **105** (FIGS. 3) includes an electric lock **114**, a bluetooth relay module **115** and DC step down model **116**, which are secured on mounting block **112** and mounting plate **113**, and covered with cover box **111**. Connection scheme of lock device **105** is shown in FIG. 5 and it supports DC 16-90V power supply. Before mounting lock device **105** on mounting bracket **106**, will be necessary to drill hole in the frame of a e-vehicle and connect lock device **105** to the battery of e-vehicle. After connecting lock device **105** to the e-vehicle battery, assembly can be finished with securing lock device **105** in mounting bracket **106** with four Torx security bolts. Lock device parts to power and control electric lock **114**, such as a bluetooth relay module **115** and DC step down model **116** are placed inside of lock device **105**, but in another embodiment, they can be placed inside of an electric scooter **101** or electric bicycle **102**. Mounting block **112**, mounting plate **113** and cover box **111** are preferably comprised of an injection moldable material, such as polyethylene (PE) or other suitable material.

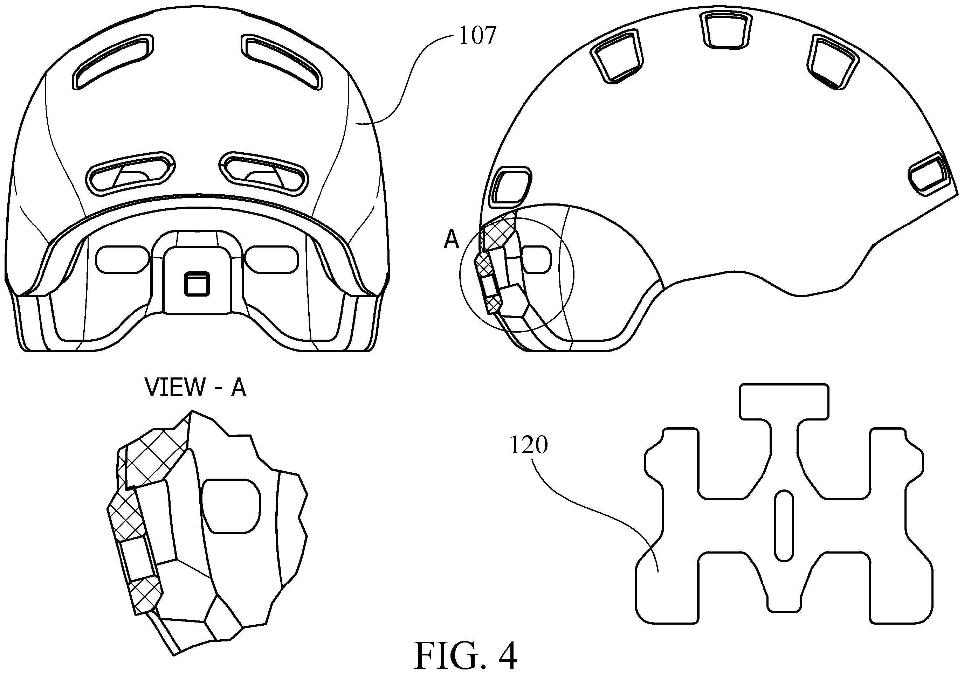

The helmet **107** (FIG. 4) comprising: a helmet shell, a helmet liner, helmet padding with single-use hair guard layers and a chin strap (not shown in FIG. 4). Helmet **107** has a latch pocket on the back of the helmet and a helmet padding **120** with single-use hair guard layers, securely mounted inside of the helmet. User can remove one layer of the single-use hair guard before using the shared helmet. Latch pocket is for securing the helmet **107** on locking mechanism, it is designed to fit between mounting bracket **106** head and lock device **105** latch plate. In another embodiment, the helmet **107** can have the latch pocket on the side or on the front of the helmet. Single-use hair guard layers are attach to helmet padding **120** in a way that they are easy to remove. In another embodiment, there can be multiple-use hair guard layer, it can be cleaned and used again. The helmet **107** shell is preferably comprised of an injection moldable material, such as polycarbonate (PC) or other suitable materials. The helmet **107** liner is preferably comprised of an injection moldable material, such as expanded polystyrene (EPS) or other suitable materials. The helmet **107** padding is preferably made of ethylene-vinyl acetate (EVA) foam or other suitable materials. The helmet **107** removable single-use hair guards layers are made of a non-woven fabric or other suitable materials.

Helmet Locking System can be used for personal consumption and in ride-sharing cases. The electric lock **114** is controlled via smartphone using the Helmet Locking System app, which can be integrated with the ride-sharing app. The lock device **105** and Helmet Locking System app are connected and communicate via Bluetooth. To unlock the helmet **107** user gives command on mobile app, app sends signal to Bluetooth relay module **115** to close electric lock **114**. As command is given the electric lock's **114** latch bolt moves in the "close" position, and now the user can remove the helmet **107** from the locking mechanism (mounting bracket **106** with lock device **105**). To lock the helmet **107**, the user will place helmet back in the locking mechanism and the electric lock's **114** latch bolt will automatically secure the helmet. When the helmet **107** has been installed back in place, the latch bolt retracts momentarily to accommodate the ramped surface, and then springs back to extend again into the latch pocket. Another feature of the invention provides a locking mechanism for securing an accessory (e.g. backpack or shopping bag). After the user takes the helmet for use, a personal item may be stored in its place.

Thus, the present invention is well adapted to carry out the objects and attain the ends and advantages mentioned above as well as those inherent therein. While presently preferred embodiments have been described for purposes of this disclosure, numerous changes and modifications will be apparent to those skilled in the art. Such changes and modifications are encompassed within the spirit of this invention as defined by the appended claims.

## Claims

1. A Helmet Locking System, comprising:
a mounting bracket (106) affixed to or for affixing to the frame of an electric scooter or electric bicycle,
a lock device (105) with a processor adapted to close electric lock (114), and
a helmet (107) with a latch pocket on the back of the helmet and a padding (120) with removable single-use hair guard layers, securely mounted inside of the helmet.

2. The Helmet Locking System of claim 1, wherein the processor is adapted to control the electric lock (114) after the user verifies that the user wants the helmet (107) released.

3. The Helmet Locking System of claim 1, wherein the user unlocks the helmet (107) through a helmet locking system software application or a ride-share software application on a mobile phone of the user.

4. The Helmet Locking System of claim 1, wherein the lock device (105) is connected to and powered by an electric scooter or electric bicycle battery, or lock device can have build in battery.

5. The Helmet Locking System of claim 1, wherein the processor is built into the lock device (105), or can be also be built into the electric scooter or electric bicycle.

6. The Helmet Locking System of claim 1, wherein lock element is an electric lock (114), or can also be a magnetic lock.

7. The Helmet Locking System of claim 1, wherein the mounting bracket (106) is securely attachable to any kind of electric scooter or electric bicycle.

8. The Helmet Locking System of claim 1, wherein the helmet (107) is specially manufactured to fit in between the mounting bracket (106) head and lock device (105) latch plate, or can be an existing helmet with adjustments.

9. The Helmet Locking System of claim 1, wherein the helmet (107) is adjustable such that it can be adjusted to fit different head sizes.

10. The Helmet Locking System of claim 1, wherein the helmet (107) has a latch pocket on the back of the helmet, but can be made on the front or side.

11. The Helmet Locking System of claim 1, wherein the helmet (107) has padding (120) with removable single-use hair guard layers or multiple-use hair guard layers.

12. The Helmet Locking System of claim 11, wherein the padding (120) with removable single-use hair guards layers are made of non-woven fabric, but can also be made of any other material used in this field.

13. The Helmet Locking System of claim 12, wherein the padding (120) with removable single-use hair guards layers are glue together or melted together around the perimeter.

14. The Helmet Locking System of claim 11, wherein the padding (120) with multiple-use hair guard layer can be cleaned and used again.
